# EUROPEAN PATENT SPECIFICATION

(11) **EP 2 006 503 B1**
(45) Date of publication and mention of the grant of the patent: **13.07.2011**
(21) Application number: 07714396.4
(22) Date of filing: 16.02.2007
(51) Int. Cl.: F01N 3/08, B01D 53/86, B01D 53/94, F01N 3/28

(54) **LIQUID TANK, BREATHER DEVICE FOR THE LIQUID TANK, AND EXHAUST GAS PURIFICATION DEVICE FOR ENGINE**
FLÜSSIGKEITSTANK, ENTLÜFTUNGSVORRICHTUNG FÜR DEN FLÜSSIGKEITSTANK UND ABGASREINIGUNGSVORRICHTUNG FÜR EINEN MOTOR
RÉSERVOIR DE LIQUIDE, RENIFLARD POUR RÉSERVOIR DE LIQUIDE ET DISPOSITIF D'ÉPURATION DES GAZ D'ÉCHAPPEMENT POUR MOTEUR

(30) Priority: 27.03.2006 JP 2006085019
(43) Date of publication of application: 24.12.2008
(73) Proprietor: Nissan Diesel Motor Co., Ltd., Ageo-shi Saitama 362-8523 (JP)
(72) Inventor: FUKUDA, Kiyoshi, Ageo-shi Saitama 362-8523 (JP); OSAKU, Yasushi, Ageo-shi Saitama 362-8523 (JP)
(74) Representative: Liesegang, Eva
(86) International application number: PCT/JP2007/052866
(87) International publication number: WO 2007/122846

(56) References cited:
- WO-A-03/018177
- JP-A- 2000 027 627
- JP-A- 2000 085 382
- JP-A- 2005 337 227
- JP-U- 01 148 920
- JP-U- 04 024 820
- JP-U- 56 003 836
- JP-U- 61 169 725
- JP-U- 64 028 319

## Description

### TECHNICAL FIELD

The present invention relates to a liquid tank, a breather device therefor, and an exhaust gas purification device for an engine. In more detail, the invention relates to a technology for preventing liquid outflow through a vent hole provided for pressure relief, in a liquid tank installed on a vehicle.

### BACKGROUND ART

A vehicle provided with an internal combustion engine (hereunder, simply referred to as "engine") serving as a driving source, is equipped with a liquid tank for storing lubricating oil, fuel, and so forth to be used when operating the engine (Patent Document 1). Moreover, development of an exhaust gas purification device for an engine that uses the urea SCR (Selective Catalytic Reduction) has progressed in recent years, and is already being put to practical use. In this exhaust gas purification device that uses the urea SCR, there is installed a liquid tank for storing urea aqueous solution that serves as a liquid reducing agent (Patent Document 2). In the liquid tank, in addition to an opening for suctioning/discharging the stored liquid, there is provided a pressure relief vent hole that communicates between the interior of the liquid tank and the exterior thereof. This vent hole is generally constructed so as to open the interior of the liquid tank to the atmosphere. When the liquid is suctioned from the liquid tank, outside air flows in via the vent hole, thereby maintaining the pressure inside the liquid tank at a constant level.
JP 56/003836 discloses a liquid tank including a vent hole at the top of the tank and a shielding member surrounding the vent hole wherein the shielding member is generally box-shaped, covering three sides of the vent hole and leaving a fourth side and the bottom side of the box open.
JP 04-024 820 A describes a liquid tank including a vent hole at the top of the tank and a shielding member into which the vent tube disembogues. The shielding member basically is a closed box, including an opening to its side as well as a remaining fuel release hole formed in the bottom portion of the shielding member.
[Patent Document 1] Japanese Laid-open (Kokai) Patent Application Publication No. H07(1995)-208138 (Paragraphs 0024 - 0027)
[Patent Document 2] Japanese Laid-open (Kokai) Patent Application Publication No. 2000-027627 (Paragraph 0013)

### DISCLOSURE OF THE INVENTION

### PROBLEMS TO BE SOLVED BY THE INVENTION

However, in a liquid tank having such a vent hole, there is a problem in that vibrations of the engine or vehicle body when traveling cause the stored liquid to flow out to the outside via the vent hole.
When the vehicle is traveling, vibrations of the engine or vehicle body are transmitted to the liquid tank, so that the wall face of the liquid tank is vibrated, then vibrations of the wall face are transmitted to and vibrate air inside the liquid tank, and cause the inside air to intermittently flow out from the liquid tank via the vent hole. Such a phenomena becomes significant if resonance occurs in the wall face of the liquid tank due to the frequency of the vibrations. In this case, sloshing or waving occurs in the liquid inside the liquid tank due to vibrations of the engine or acceleration/deceleration of the vehicle, and if the liquid is attached to the surroundings of the vent hole, this attached liquid together with the inside air flows out to the outside via the vent hole.

The present invention addresses the above problems, and provides a structure that makes attachment of liquid to the surroundings of the vent hole unlikely to occur, thereby preventing liquid outflow through the vent hole.

### MEANS FOR SOLVING THE PROBLEMS

The present invention provides a liquid tank according to claim 1, a breather device therefor according to claim 12, and an exhaust gas purification device for an engine according to claim 13.

### EFFECTS OF THE INVENTION

According to the present invention, inside the liquid tank, the shielding member is disposed so as to surround the vent hole. In the first portion of the shielding member located to the side of the vent hole to enclose the vent hole in the horizontal direction, while air circulation is allowed between the isolated chamber and the inner space of the liquid tank excluding the isolated chamber ("inner space of the liquid tank" and "space inside the liquid tank main body" excludes the isolated chamber unless otherwise stated), while in the second portion, movement of the liquid between the isolated chamber and the inner space is blocked. Consequently, even if sloshing or waving occurs in the liquid inside the liquid tank due to vibrations of the engine or the like when traveling, attachment of the liquid to the surroundings of the vent hole is suppressed by the first portion (excluding the opening) and the second portion, so that liquid outflow via the vent hole can be prevented. The pressure inside the liquid tank is relieved via; the vent hole, the isolated chamber formed by the shielding member, and the opening of the first portion.

As such, those skilled in the art will appreciate that other objects and features of the present invention can be understood from the following description, with reference to the appended drawings.
The entire contents of Japanese Patent Application No. 2006-085019 on which the priority of this application is based, are incorporated herein by reference.

### BRIEF DESCRIPTION OF THE DRAWINGS

FIG. 1 is a schematic block diagram of an exhaust gas purification device for an engine, according to a first embodiment of the present invention.
FIG. 2 is a front perspective view of a liquid tank according to the embodiment.
FIG. 3 is a front sectional view of the liquid tank.
FIG. 4 is a side sectional view of the liquid tank.
FIG. 5 is a front sectional view of a liquid tank according to a second embodiment of the present invention.
FIG. 6 is a side sectional view of the liquid tank.
FIG. 7 is an enlarged perspective view of a mounting portion for a shielding plate.
FIG. 8 is a front view of an L-shaped member that constitutes the shielding plate.
FIG. 9 is a plan view of the L-shaped member.
FIG. 10 is a bottom view of the mounting portion for the shielding plate constituted using the L-shaped member.

### DESCRIPTION OF THE REFERENCE SYMBOLS

1: Diesel engine, 2: Exhaust gas passage, 3: Reducing catalytic converter, 4: Urea aqueous solution injection nozzle, 5, 8: Reducing agent supply pipe, 6: Reducing agent supply device, 7: Liquid tank, 9: Reducing agent return pipe, 10: Control unit, 101: Accelerator sensor, 102: Crank angle sensor, 103: Coolant temperature sensor, 11: Refilling opening, 20: Top lid, 21: Heat exchange pipe, 22: Coolant supply opening, 23: Coolant discharge opening, 24: Breather pipe, 25: Vent hole, 26: Breather hose, 30, 40: Shielding plate, 31: U-shaped member that forms the shielding plate, 41: L-shaped member that forms the shielding plate, 31a, 41 a: First portion of the shielding plate, 31b, 41b: Second portion of the shielding plate, 32, 42: Isolated chamber, 33, 43: Opening of the shielding plate, and 44, 45: Side plate.

### BEST MODE FOR CARRYING OUT THE INVENTION

Hereunder is a description of embodiments of the present invention, with reference to the drawings.

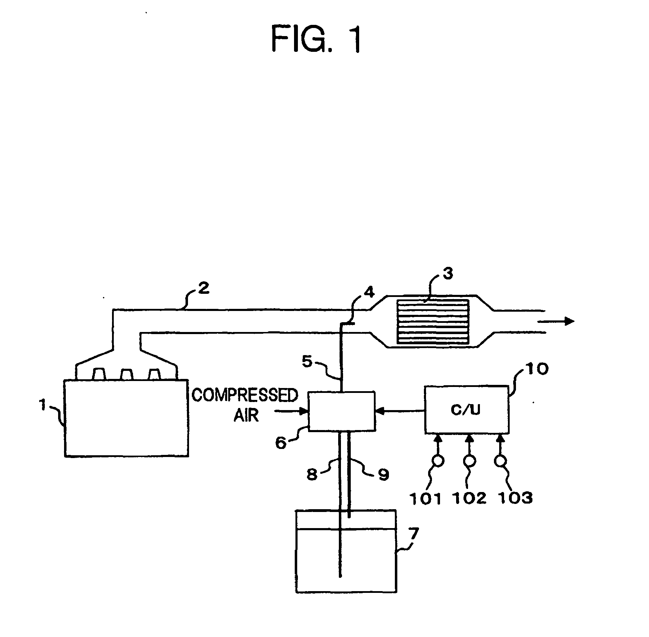

FIG. 1 is a schematic block diagram of an exhaust gas purification device for an engine, according to a first embodiment of the present invention.
In the present embodiment, an engine 1 is a diesel engine, and is employed to constitute a driving source of a vehicle (here, a large vehicle such as truck).

In an exhaust gas passage 2 of the engine 1, there is interposed a reducing catalytic converter 3 for nitrogen oxides (hereunder, referred to as "NOx"), and this reducing catalytic converter 3 accelerates reductive purification of NOx in engine exhaust gas. In the present embodiment, urea aqueous solution serving as a liquid reducing agent is supplied to the exhaust gas for NOx purification, and a urea aqueous solution injection nozzle 4 (hereunder, simply referred to as "injection nozzle") is provided on the upstream of the reducing catalytic converter 3. The injection nozzle 4 is inserted into the exhaust gas passage 2 in a manner of passing through the pipe wall of the exhaust gas passage 2 from the outside, and the tip end thereof is directed to the end face on the upstream side of the reducing catalytic converter 3.

Urea aqueous solution to be supplied into the exhaust gas is stored in a liquid tank 7. In consideration if simplifying use on a vehicle, urea, which is an ammonia precursor, has previously prepared in aqueous solution state. The liquid tank 7 is connected, via a reducing agent supply pipe 8, to a reducing agent supply device 6. The reducing agent supply pipe 8 forms a delivery passage for the urea aqueous solution towards the reducing agent supply device 6. A member constituting this supply pipe 8 corresponds to a "pipe member" according to the present embodiment. A feed pump (not shown in the drawing) feeds the urea aqueous solution in the liquid tank 7, via the reducing agent supply pipe 8, to the reducing agent supply device 6. The reducing agent supply device 6 is connected, via a reducing agent supply pipe 5, to the injection nozzle 4, and the urea aqueous solution that has been fed into the reducing agent supply device 6 is supplied together with compressed air, via the reducing agent supply pipe 5, to the injection nozzle 4. The urea supplied to the exhaust gas is hydrolyzed by exhaust heat, to generate ammonia and is then supplied to the reducing catalytic converter 3 as a NOx reducing agent. The reducing agent supply device 6 is connected to the liquid tank 7 not only via the reducing agent supply pipe 8, but also via a reducing agent return pipe 9. A surplus portion of the urea aqueous solution supplied from the liquid tank 7 to the reducing agent supply device 6 that is not supplied to the injection nozzle 4 is returned to the liquid tank 7 via this return pipe 9.

The operation of the reducing agent supply device 6 is controlled by signals from an electronic control unit 10 (also serving as a control unit for the engine 1; hereunder simply referred to as "control unit"). The control unit 10 performs, based on the operating state of the engine 1, a predetermined calculation related to a reducing agent supply operation, and outputs a command signal to the reducing agent supply device 6. In the present embodiment, for detecting the operating state, there are provided: an accelerator sensor 101 that detects an amount of operation of the accelerator pedal by a driver; a crank angle sensor 102 that detects a rotating angle of the crank shaft; and a temperature sensor 103 that detects the temperature of engine coolant. The engine rotating speed can be calculated based on signals from the crank angle sensor 12.

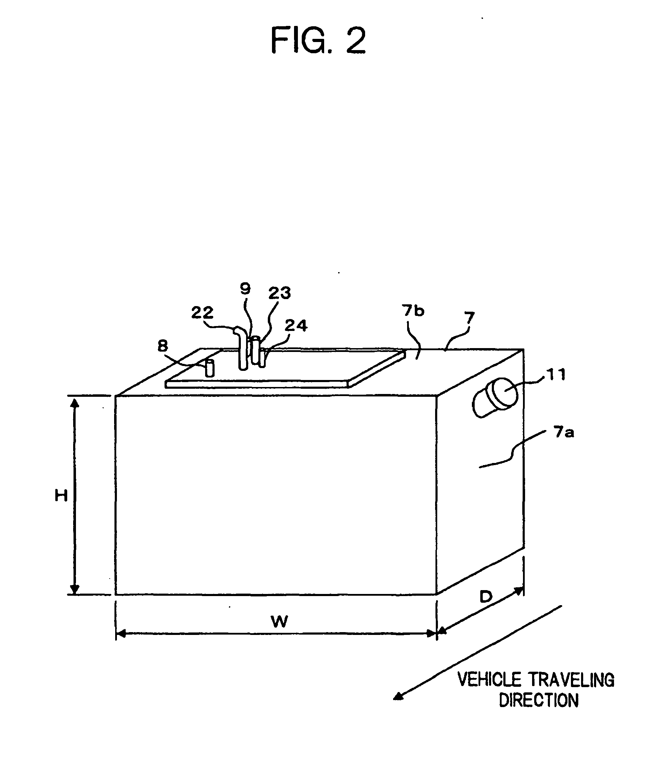

FIG. 2 is a front perspective view showing an overall configuration of the liquid tank 7 according to the present embodiment.
The liquid tank 7 is formed overall in a rectangular in cross-section with a depth D shorter than a width W (and height H), and is mounted on a vehicle in a state where the direction of the depth D coincides with the traveling direction of the vehicle. In an upper part of a left side wall 7a of the liquid tank 7, there is provided a refilling opening 11 for refilling urea aqueous solution.

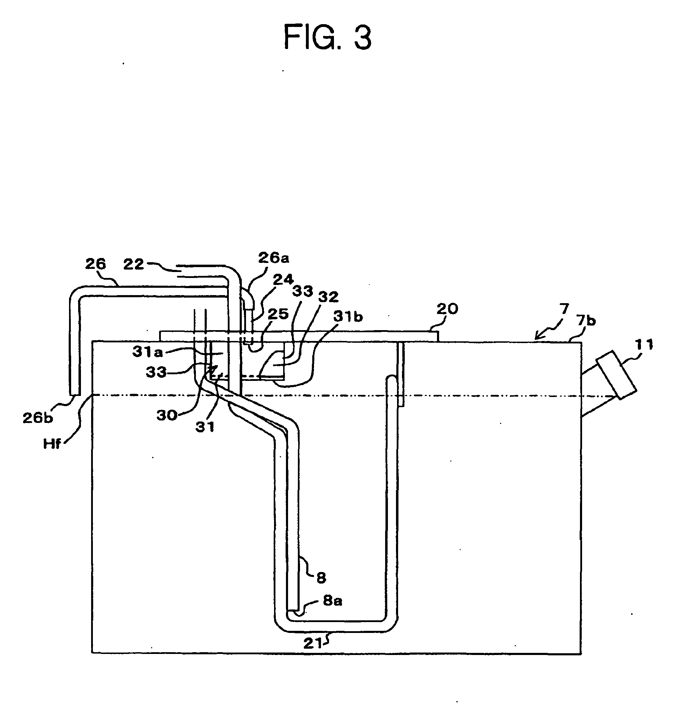

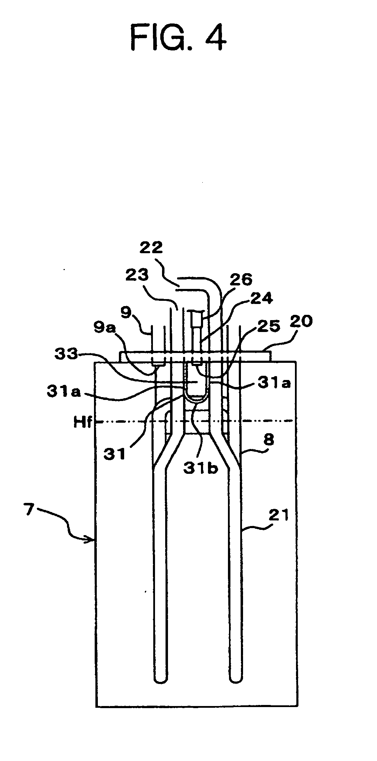

FIG. 3 and FIG. 4 show an internal structure of the liquid tank 7 according to the present embodiment FIG. 3 is a sectional view of the liquid tank 7 viewed from the front, and FIG. 4 is a sectional view of the liquid tank 7 viewed from the right side.
In an upper wall 7b of the liquid tank 7, there is provided an opening for inserting the reducing agent supply pipe 8 and a heat exchange pipe 21 described later into the liquid tank 7, and a top lid 20 is fastened on the upper wall 7b so as to close up this opening. The reducing agent supply pipe 8, the heat exchange pipe 21, and the reducing agent return pipe 9 pass through and are fixed on the top lid 20. In the state shown in the drawing with the top lid fastened, the reducing agent supply pipe 8 extends to the bottom part of the liquid tank 7 (in FIG. 3 the tip end is denoted by reference symbol 8a). The reducing agent return pipe 9 ends in close proximity to the underside face of the top lid 20, and opens above the fluid level Hf at which the liquid tank is fully filled (in FIG. 4 the tip end is denoted by reference symbol 9a).

The heat exchange pipe 21 is disposed inside the liquid tank 7. The heat exchange pipe 21 is formed by bending a rod shaped pipe, and constitutes a heat exchanger that circulates engine coolant to thereby exchange heat between the engine coolant and the urea aqueous solution inside the liquid tank 7. Opposite ends of the heat exchange pipe 21 pass through the top lid 20 so as to extend to the outside of the liquid tank 7. One opening 22 forms a supply port for engine coolant and another opening 23 forms a discharge port for the engine coolant. The heat exchange pipe 21 constitutes a part of an engine coolant circulation passage. The engine coolant heated by the engine 1 travels through this heat exchange pipe 21, thereby heating urea aqueous solution stored in the liquid tank 7. In a cold state of operation, even though the urea aqueous solution inside the liquid tank 7 is frozen at the time of starting the engine 1, heated engine coolant travels through the heat exchange pipe 21, thereby promoting thawing out of the frozen urea aqueous solution. Moreover, when the urea aqueous solution inside the liquid tank 7 is excessively heated, the engine coolant acts as a coolant for cooling down the urea aqueous solution, thereby preventing precipitation of urea.

Furthermore, on the top lid 20 there is attached a breather pipe 24 hollowed therethrough in the axial direction. By means of this breather pipe 24, the interior of the liquid tank 7 is communicated with the exterior thereof, and a vent hole 25 is formed for relieving the pressure inside the liquid tank 7. The breather pipe 24 extends upward beyond the top lid 20, and to the top end of the breather pipe 24, there is connected one end 26a of a breather hose 26. The breather hose 26 extends sideways beyond the right side wall of the liquid tank 7, and another end 26b of the breather hose 26 faces downward at a position in close proximity to the fluid level Hf at which the liquid tank 7 is fully filled.

Furthermore, on the top lid 20, there is attached a shielding plate 30 for suppressing attachment of the urea aqueous solution to the surroundings of the vent hole 25. In the present embodiment, the shielding plate 30 is constituted by a member 31 made by bending a rectangular thin plate in a U-shape, and is fixed on the underside face of the top lid 20 in a condition with a bent part 31 b (that corresponds to a "second portion" of the shielding member) of the U-shaped member 31 directed downward below the vent hole 25. The bent part 31 b is located above the fluid level Hf at which the liquid tank 7 is fully filled. Moreover, the shielding plate 30 is disposed so as to straddle the opening (that is, the vent hole 25) of the breather pipe 24 in the depth D direction of the liquid tank 7, that is, the vehicle traveling direction. In front and rear of the vent hole 25 in the traveling direction and below the vent hole 25, the shielding pate 30 partitions the interior of the liquid tank 7 so as to form an isolated chamber 32 that communicates with the vent hole 25. In a portion of the shielding plate 30 continuing from the inner wall of the liquid tank 7 (that corresponds to the "first portion" and is formed by flat face parts 31 a of the U-shaped member 31), there are provided opposite U-shaped openings 33 at positions on the left and right sides of the vent hole 25 in the vehicle widthwise direction, and the isolated chamber 32 and the inner space of the liquid tank 7 excluding this chamber 32 are communicated via these openings 33. The shielding plate 30 is formed with a wide width, and has a dimension in the width W direction that is greater than that in the depth D direction, in a state of being installed inside the liquid tank 7. In the present embodiment, the shielding plate 30 is In direct contact with the heat exchange pipe 21. However, the shielding plate 30 may be in contact with the heat exchange pipe 21 via a heat transfer body. The shielding plate 30 and the heat exchange pipe 21 may be joined together by welding. In this case, the welding bead acts as a heat transfer body.

According to the present embodiment, the following effects can be achieved.
That is to say, in the present embodiment, inside the liquid tank 7, the U-shaped shielding plate 30 is installed so as to straddle the vent hole 25 in the vehicle traveling direction, and movement of the urea aqueous solution to the front and rear of the vent hole 25 in the traveling direction and below the vent hole 25 is thereby blocked. Therefore, even if sloshing or waving occurs in the urea aquwous solution in the liquid tank 7 due to vibrations of the engine 1 and acceleration/deceleration of the vehicle, the shielding plate 30 suppresses attachment of the urea aqueous solution to the surroundings of the vent hole 25, so that outflow of the urea aqueous solution through the vent hole 25 can be prevented. In the present embodiment, in particular, the liquid tank 7 is formed in a rectangular in cross-section that is long in the width W direction with respect to the depth D direction, and the front and rear wall faces have an area that is greater than that of the left and right wall faces. Therefore, in the case where vibrations occur in the wall faces of the liquid tank 7 due to vibrations of the engine 1 during operation, in the liquid tank 7, waves are likely to occur between the front and rear wall surfaces, in other words, they are likely to occur in the depth D direction. In the present embodiment, as described above, the shielding plate 30 is formed with a wide width, and has a larger dimension in the width W direction in a state of being installed inside the liquid tank 7. Therefore, waves that occur between the front and rear wall faces can be reliably stopped by the shielding plate 30, so that attachment of the urea aqueous solution to the surroundings of the vent hole 25 can be suppressed. Moreover, by making the shielding plate 30 have a greater dimension in the width W direction, then when the vehicle body sways left and right due to traveling course changes, a situation where the urea aqueous solution goes around the first portion 31 a of the shielding plate 30 and reaches the vent hole 25 via the openings 33 can be suppressed. Moreover, by making the depth D direction of the liquid tank 7 coincide with the traveling direction of the vehicle, then even if waves occur in the urea aqueous solution due to acceleration/deceleration of the vehicle, attachment of the urea aqueous solution can be suppressed.

Furthermore, in the present embodiment, the shielding plate 30 is in contact with the heat exchange pipe 21 and the engine coolant is circulated through this pipe 21, so that heat of the engine coolant is directly transferred to the shielding plate 30. Therefore, in a cold state of operation, even though the urea aqueous solution is frozen, and lumps of ice are formed in the liquid tank 7 and block up the openings 33 of the shielding plate 30, this ice lumps can be quickly thawed out so that the function of the vent hole 25 can be maintained. On the other hand, when the urea aqueous solution is excessively heated, this is cooled by the engine coolant. Therefore, precipitation of urea from the urea aqueous solution can be prevented.

Hereunder, another embodiment of the present invention will be described.

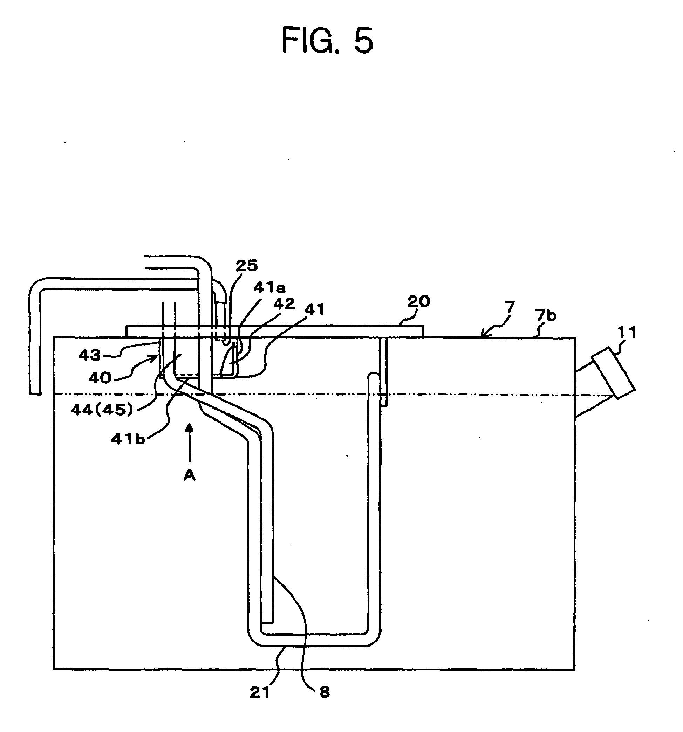

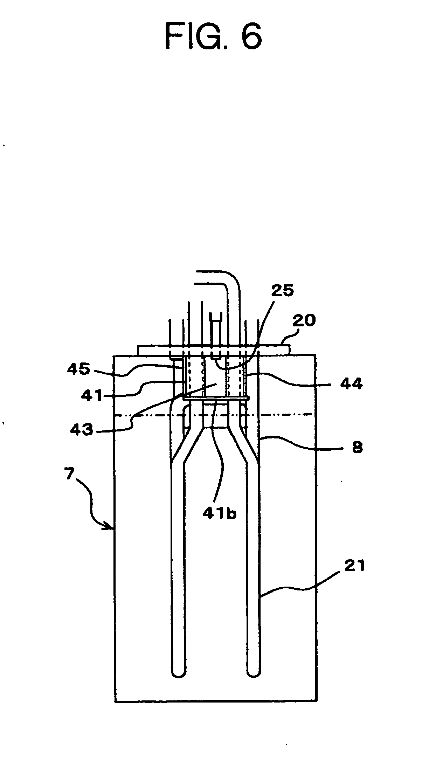

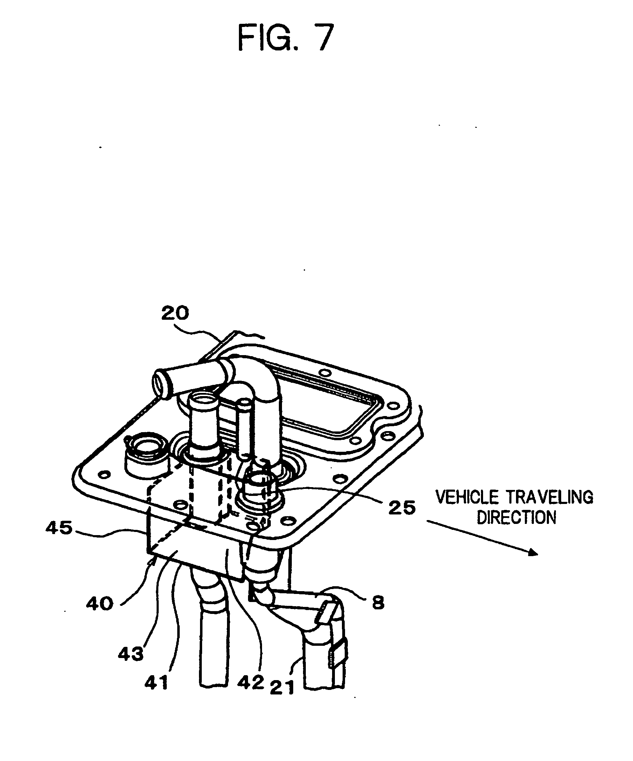

FIG. 5 and FIG. 6 show an internal structure of a liquid tank 7 according to a second embodiment of the present invention. FIG. 5 is a sectional view viewed from the front, and FIG. 6 is a sectional view viewed from the right side. Moreover, FIG. 7 is an enlarged perspective view showing a configuration of a mounting portion for a shielding plate 40 according to the present embodiment. In the present embodiment, the configuration of components or parts other than the liquid tank 7 may be similar to those in the first embodiment. Moreover, in FIG. 5 and FIG. 6, components or parts having functions or effects similar to in the first embodiment are denoted by the same reference symbols, and detailed descriptions thereof are omitted.

The liquid tank 7 according to the present embodiment, compared to that in the first embodiment, is characterized in the configuration of the shielding plate 40. As shown enlarged in FIG. 7, in the present embodiment, the shielding plate 40 is formed by joining an L-shaped member 41 and side plates 44 and 45 into a box shape by means of welding, soldering or the like. The shielding plate 40 is attached to the underside face of the top lid 20 so as to surround the vent hole 25, thereby partitioning the interior of the liquid tank 7 in front and to the rear and left side of the vent hole 25 in the vehicle traveling direction, and below the vent hole 25 so as to form an isolated chamber 42 communicating with the vent hole 25. In a portion of the shielding plate 40 continuing from the inner wall of the liquid tank 7 (that corresponds to the "first portion" and is formed by a side part 41 a of the L-shaped member 41 and the side plates 44 and 45), there is formed a rectangular shaped opening 43 at a position on the right side of the vent hole 25 in the vehicle widthwise direction, and the isolated chamber 42 and the inner space within the liquid tank 7 excluding this chamber 42 are communicated via the opening 43. In the present embodiment, the "second portion" of the shielding member is formed by a bottom part 41 b of the L-shaped member.

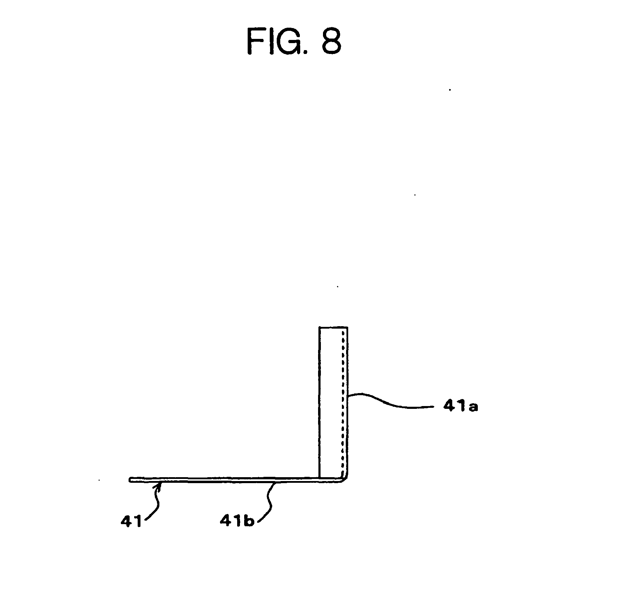

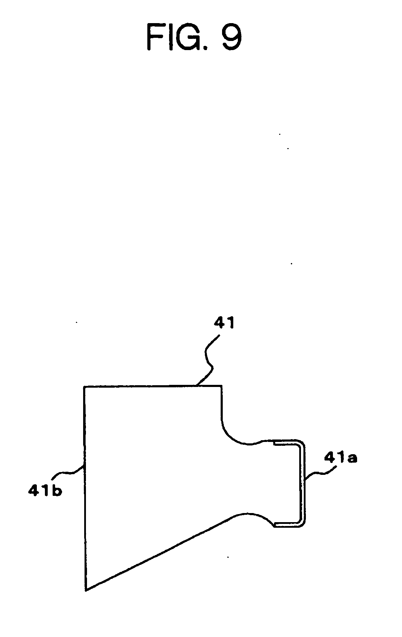

FIG. 8 and FIG. 9 show a configuration of the L-shaped member 41 that constitutes the shielding plate 40 according to the present embodiment. FIG. 8 is a front view and FIG. 9 is a plan view.
The L-shaped member 41 is formed by bending a flat thin plate in a substantial L-shape. The side part 41 a forms the "first portion" of the shielding member, and the bottom part 41 b forms the "second portion" thereof.

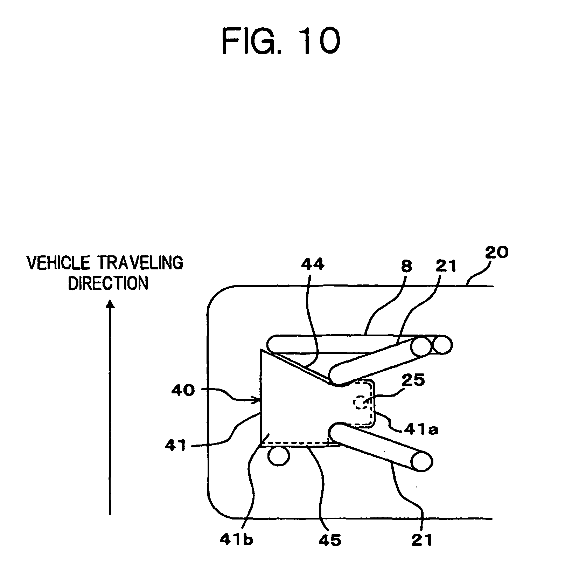

FIG. 10 is a bottom view of the mounting portion for the shielding plate 40 according to the present embodiment. As shown in FIG. 10, the side part 41 a of the L-shaped member 41 is disposed to the side of the vent hole 25 in the horizontal direction (on the left side with respect to the vehicle traveling direction), and the bottom part 41 b is disposed below the vent hole 25, thereby partitioning the interior of the liquid tank 7 at their respective positions.
The side plates 44 and 45 are both formed in a flat plate shape, and one side plate 44 in front of the vent hole 25 in the traveling direction, and another side plate 45 to the rear of the vent hole 25 in the traveling direction, respectively partition the interior of the liquid tank 7. In the present embodiment, the side plate 44 disposed on the front side also serves as a heat transfer plate that connects the heat exchange pipe 21 and the reducing agent supply pipe 8. That is to say, the side plate 44 is joined to the bottom part 41 b of the L-shaped member 41, and is also disposed so as to be in contact with both of the heat exchange pipe 21 and the reducing agent supply pipe 8. When the engine coolant heated by the engine 1 travels through the heat exchange pipe 21, heat of the engine coolant is transferred to the reducing agent supply pipe 8 via the side plate 44, and the urea aqueous solution in the reducing agent supply pipe 8 is heated.

According to the present embodiment, since the side part 41 a of the L-shaped member 41 is disposed on the left side of the vent hole 25 in relation to the vehicle traveling direction, attachment of the urea aqueous solution from this left side can be prevented. In particular, according to the present embodiment, since the side plate 44 prevents attachment of urea aqueous solution and this side plate 44 also serves a function of the heat transfer plate that connects the heat exchange pipe 21 and the reducing agent supply pipe 8, it is possible to promote thawing out of the urea aqueous solution that is frozen within the reducing agent supply pipe 8, while reducing the number and weight of required components.

In the above description, the shielding plate is formed such that the sectional shape thereof is of a U-shape or L-shape (overall box shape). However, the shape of the shielding plate is not limited to these shapes, and may be any shape that can surround the vent hole within the liquid tank. The shape of the shielding plate may be appropriately selected according to the direction of sloshing or waving of the liquid that occurs inside the liquid tank.
Moreover, in the second embodiment, a portion of the shielding plate also serves a function of the heat transfer plate. However, additional functions of the shielding plate are not limited to this. It is possible to constitute the shielding plate using other components provided in the liquid tank than the heat transfer plate.

Furthermore, the shape of the liquid tank is not limited to the rectangular shape described above, and it is possible to adopt various shapes. The direction of waves that occur in the liquid tank due to vibrations of the engine during operation is pre-checked, and the shape of the shielding plate (in other words, the position of the opening) is set so that waves occurring in this direction are blocked.
The present invention is not limited to a liquid tank for storing urea aqueous solution, and may also be applied to a liquid tank for storing other types of liquids, including other liquid reducing agents such as aqueous ammonia and fuel of hydrocarbon, lubricating oil, fuel and so forth.

The present invention has been described above by the preferred embodiments. However, the scope of the present invention is not limited by this description, and is to be judged in accordance with applicable provisions, based on the disclosure of the claims.

## Claims

1. A liquid tank comprising:
a tank main body (7) configured to store a liquid therein, the tank main body including a vent hole (25) enabling an interior of the tank main body to communicate with an exterior thereof; and
a shielding member (30; 40) attached to the tank main body so as to surround the vent hole within the tank main body, and to form an isolated chamber (32; 42) communicated with the vent hole, wherein
the shielding member includes a first portion (31a; 4 1 a) located to the side of the vent hole and a second portion (31 b; 41 b) located below the vent hole to form a bottom portion of the isolated chamber (32; 42), wherein, out of the first and second portions, only the first portion of the shielding member forms an opening (33; 43) that communicates between the isolated chamber (32; 42) and an inner space of the tank main body excluding the isolated chamber, and the second portion blocks movement of the liquid between the isolated chamber (32; 42) and the inner space.

2. The liquid tank according to claim 1, wherein the shielding member (30) is constituted by a single member (31) with a cross-section formed in a U-shape.

3. The liquid tank according to one of the preceding claims, wherein the vent hole (25) is provided in a lid part (20) of the tank main body (7).

4. The liquid tank according to one of the preceding claims, wherein
the tank main body (7) is of a rectangular in cross-section with the depth less than the width, and
the shielding member (30; 40) is longer in the width direction of the tank main body than in the depth direction thereof.

5. The liquid tank according to claim 4 provided for a vehicle, wherein
the tank main body (7) is fixed with respect to the vehicle, with the widthwise direction thereof aligned with the left to right direction of the vehicle.

6. A liquid tank according to one of the preceding claims provided for a vehicle having an engine, further comprising a heat exchange pipe (21) located inside the tank main body (7), the heat exchange pipe (21) being configured to circulate an coolant of the engine.

7. The liquid tank according to claim 6, wherein the heat exchange pipe (21) is located inside the tank main body (7), in contact with the shielding member (30; 40).

8. The liquid tank according to claim 7, wherein the heat exchange pipe (21) is contacted with the shielding member (30; 40) via a heat transfer body.

9. The liquid tank according to one of claims 6-8 further comprising a pipe member (8) forming a delivery passage for the liquid, wherein
the heat exchange pipe (21) is thermally contacted with the pipe member (8) via the shielding member (30; 40).

10. The liquid tank according to claim 9, wherein
the liquid is a urea aqueous solution, and
the pipe member (8) is arranged to constitute a passage for delivering the urea aqueous solution stored in the tank main body (7), towards an exterior of the tank main body.

11. The liquid tank according to claim 1, wherein the liquid is a urea aqueous solution.

12. An exhaust gas purification device for an engine, comprising:
the liquid tank according to one of the preceding claims, configured to be appropriate for storing a liquid reducing agent as the liquid;
a NOx reducing catalytic converter installed in an exhaust gas passage of the engine; and
a device configured to be capable of supplying the liquid reducing agent stored in the liquid tank, to an exhaust gas on the upstream of the reducing catalytic converter.

13. A breather device for relieving the pressure inside a liquid tank, comprising:
a breather pipe (24) forming a vent hole (25) that enables an interior of the liquid tank (7) to communicate with an exterior thereof; and
a shielding member (30; 40) configured to be disposed with respect to the breather pipe,
within the liquid tank (7) so as to surround the vent hole (25), and to form an isolated chamber (32; 42) communicated with the vent hole, wherein
the shielding member (30; 40) includes a first portion (31a; 41a) and a second portion (31b; 41b), and
the first portion (31a; 41 a) being located to the side of the vent hole (25), and the second portion (31b; 41 b) being located below the vent hole (25) to form a bottom portion of the isolated chamber (32; 42), and wherein, out of the first and second portions, only the first portion (31a; 41a) of the shielding member forms an opening (33; 43) that communicates between the isolated chamber and an inner space within the liquid tank (7) excluding the isolated chamber, and
the second portion (31b; 41b) blocks the movement of liquid between the isolated chamber and the inner space.

## Patentansprüche

1. Flüssigkeitstank mit:
einem Tank-Hauptkörper (7), der dazu konfiguriert ist, eine Flüssigkeit darin zu speichern, wobei der Tank-Hauptkörper ein Belüftungsloch (25) aufweist, dass es dem Inneren des Tank-Hauptkörpers erlaubt, mit der Tankaußenseite in Verbindung zu treten; und
einem Abschirmelement (30; 40), das an dem Tank-Hauptkörper angebracht ist, um das Belüftungsloch innerhalb des Tank-Hauptkörpers zu umgeben und eine isolierte Kammer (32; 42) zu bilden, die mit dem Belüftungsloch in Verbindung ist, wobei das Abschirmelement einen ersten Teil (31a; 41 a), der seitlich des Belüftungslochs liegt, und einen zweiten Teil (31b; 41b), der unter dem Belüftungsloch liegt, um einen Bodenabschnitt der isolierten Kammer (32; 42) zu bilden, aufweist, wobei von dem ersten und dem zweiten Teil nur der erste Teil des Abschirmelements eine Öffnung (33; 43) bildet, die eine Verbindung zwischen der isolierten Kammer (32; 42) und einem Innenraum des Tank-Hauptkörpers, außer der isolierten Kammer, bildet, und wobei der zweite Teil eine Bewegung der Flüssigkeit zwischen der isolierten Kammer (32; 42) und dem Innenraum blockiert.

2. Flüssigkeitstank nach Anspruch 1, wobei das Abschirmelement (30) durch ein einziges Element (31) mit einem U-förmigen Querschnitt gebildet wird.

3. Flüssigkeitstank nach einem der vorangehenden Ansprüche, wobei das Belüftungsloch (25) in einem Deckelteil (20) des Tank-Hauptkörpers (7) vorgesehen ist.

4. Flüssigkeitstank nach einem der vorangehenden Ansprüche, wobei der Tank-Hauptkörper (7) einen rechteckigen Querschnitt hat, dessen Tiefe geringer ist als seine Breite, und
das Abschirmelement (30; 40) in Richtung der Breite des Tank-Hauptkörpers länger ist als in Richtung seiner Tiefe.

5. Flüssigkeitstank nach Anspruch 4 für ein Fahrzeug, wobei
der Tank-Hauptkörper (7) relativ zu dem Fahrzeug so angebracht ist, dass seine Erstreckung in Richtung der Breite von links nach rechts zum dem Fahrzeug ausgerichtet ist.

6. Flüssigkeitstank nach einem der vorangehenden Ansprüche für ein Fahrzeug mit einem Motor, mit ferner einem Wärmetauscherrohr (21), das innerhalb des Tank-Hauptkörpers (7) liegt, wobei das Wärmetauscherrohr (21) dazu konfiguriert ist, ein Kühlmittel des Motors zirkulieren zu lassen.

7. Flüssigkeitstank nach Anspruch 6, wobei das Wärmetauscherrohr (21) innerhalb des Tank-Hauptkörpers (7) in Kontakt mit dem Abschirmelement (30; 40) angeordnet ist.

8. Flüssigkeitstank nach Anspruch 7, wobei das Wärmetauscherrohr (21) mit dem Abschirmelement (30, 40) über einen Wärmeübertragungskörper in Kontakt ist.

9. Flüssigkeitstank nach einem der Ansprüche 6 bis 8, mit ferner einem Rohrelement (8), das einen Zuführdurchgang für die Flüssigkeit bildet, wobei
das Wärmetauscherrohr (21) mit dem Rohrelement (8) über das Abschirmelement (30; 40) in thermischem Kontakt ist.

10. Flüssigkeitstank nach Anspruch 9, wobei
die Flüssigkeit eine wässrige Harnstofflösung ist und
das Rohrelement (8) so angeordnet ist, dass es einen Durchgang für die Abgabe der in dem Tank-Hauptkörper (7) gespeicherten flüssigen Harnstofflösung in Richtung der Außenseite des Tank-Hauptkörpers bildet.

11. Flüssigkeitstank nach Anspruch 1, wobei die Flüssigkeit eine wässrige Harnstofflösung ist.

12. Abgasreinigungseinrichtung für einen Motor mit:
dem Flüssigkeitstank nach einem der vorangehenden Ansprüche, der zum Speichern eines flüssigen Reduktionsmittels als die Flüssigkeit konfiguriert ist;
einem NOₓ-Reduktionskatalysator, der in einem Abgasdurchgang des Motors installiert ist; und
einer Einrichtung, welche das in dem Flüssigkeitstank gespeicherte flüssige Reduktionsmittel einem Abgas stromaufwärts des Reduktionskatalysators zuführen kann.

13. Entlüftungseinrichtung zum Abbauen von Druck innerhalb eines Flüssigkeitstanks mit:
einem Entlüftungsrohr (24), das ein Belüftungsloch (25) bildet, über welches das Innere des Flüssigkeitstanks (7) mit seinem Äußeren in Verbindung treten kann; und
einem Abschirmelement (30; 40), das relativ zu dem Entlüftungsrohr innerhalb des Flüssigkeitstanks (7) angeordnet werden kann, um das Belüftungsloch (25) zu umgeben und um eine isolierte Kammer (32; 42) zu bilden, die mit dem Belüftungsloch in Verbindung ist, wobei
das Abschirmelement (30; 40) einen ersten Teil (31a, 41a) und einen zweiten Teil (31 b; 41 b) aufweist und
der erste Teil (31a; 41a) seitlich des Belüftungslochs (25) liegt und der zweite Teil (31b; 41b) unter dem Belüftungsloch (25) liegt, um einen Bodenabschnitt der isolierten Kammer (32; 42) zu bilden, und wobei von dem ersten und dem zweiten Teil nur der erste Teil (31a; 41a) des Abschirmelements eine Öffnung (33; 43) bildet, die eine Verbindung zwischen der isolierten Kammer und einem Innenraum innerhalb des Flüssigkeitstanks (7), außer der isolierten Kammer, bildet, und
wobei der zweite Teil (31b; 41b) eine Bewegung der Flüssigkeit zwischen der isolierten Kammer und dem Innenraum blockiert.

## Revendications

1. Réservoir de liquide comportant :
un corps principal de réservoir (7) configuré pour y stocker un liquide, le corps principal de réservoir comprenant un trou de mise à l'air libre (25) permettant à un intérieur du corps principal de réservoir de communiquer avec un extérieur de celui-ci ; et
un élément de protection (30 ; 40) fixé sur le corps principal de réservoir de façon à entourer le trou mise à l'air libre à l'intérieur du corps principal de réservoir, et former une chambre isolée (32; 42) en communication avec le trou mise à l'air libre, dans lequel
l'élément de protection comprend une première partie (31a; 41a) située sur le côté du trou mise à l'air libre et une deuxième partie (31b; 41b) située en-dessous du trou mise à l'air libre afin de former une partie de fond de la chambre isolée (32; 42), dans lequel, parmi les première et deuxième parties, seule la première partie de l'élément de protection forme une ouverture (33; 43) qui communique entre la chambre isolée (32; 42) et un espace intérieur du corps principal de réservoir à l'exclusion de la chambre isolée, et la deuxième partie bloque un mouvement du liquide entre la chambre isolée (32; 42) et l'espace intérieur.

2. Réservoir de liquide selon la revendication 1, dans lequel l'élément de protection (30) est constitué par un unique élément (31) avec une section transversale en forme de U.

3. Réservoir de liquide selon l'une des revendications précédentes, dans lequel le trou de mise à l'air libre (25) est prévu dans une partie de couvercle (20) du corps principal de réservoir (7).

4. Réservoir de liquide selon l'une des revendications précédentes, dans lequel
le corps principal de réservoir (7) est d'une section rectangulaire avec la profondeur plus petite que la largeur, et
l'élément de protection (30; 40) est plus long dans le sens de la largeur du corps principal de réservoir que dans le sens de la profondeur de celui-ci.

5. Réservoir de liquide selon la revendication 4 prévu pour un véhicule, dans lequel
le corps principal de réservoir (7) est fixe par rapport au véhicule, avec sa direction transversale alignée avec la direction de gauche à droite du véhicule.

6. Réservoir de liquide selon l'une des revendications précédentes prévu un véhicule ayant un moteur, comportant en outre un tube d'échange thermique (21) disposé à l'intérieur du corps principal de réservoir (7), le tube d'échange thermique (21) étant configuré pour faire circuler un agent de refroidissement du moteur.

7. Réservoir de liquide selon la revendication 6, dans lequel le tube d'échange thermique (21) est disposé à l'intérieur du corps principal de réservoir (7), en contact avec l'élément de protection (30; 40).

8. Réservoir de liquide selon la revendication 7, dans lequel le tube d'échange thermique (21) est mis en contact avec l'élément de protection (30; 40) par l'intermédiaire d'un corps de transfert de chaleur.

9. Réservoir de liquide selon l'une des revendications 6 à 8 comportant en outre un élément de tube (8) formant un passage d'alimentation pour le liquide, dans lequel
le tube d'échange thermique (21) est mis thermiquement en contact avec l'élément de tube (8) par l'intermédiaire de l'élément de protection (30; 40).

10. Réservoir de liquide selon la revendication 9, dans lequel
le liquide est une solution aqueuse d'urée, et
l'élément de tube (8) est prévu pour constituer un passage destiné à délivrer la solution aqueuse d'urée stockée dans le corps principal de réservoir (7), vers un extérieur du corps principal de réservoir.

11. Réservoir de liquide selon la revendication 1, dans lequel le liquide est une solution aqueuse d'urée.

12. Dispositif de purification de gaz d'échappement pour un moteur, comportant :
le réservoir de liquide selon l'une des revendications précédentes, configuré pour être approprié pour le stockage d'un agent réducteur liquide en tant que liquide ;
un convertisseur catalytique de réduction de NOₓ installé dans un passage de gaz d'échappement du moteur ; et
un dispositif configuré pour être capable de délivrer l'agent réducteur liquide stocké dans le réservoir
de liquide, à un gaz d'échappement en amont du convertisseur catalytique de réduction.

13. Dispositif de reniflard destiné à libérer la pression à l'intérieur d'un réservoir de liquide, comportant :
un tube de reniflard (24) formant un trou de mise à l'air libre (25) qui permet à un intérieur du réservoir de liquide (7) de communiquer avec un extérieur de celui-ci ; et
un élément de protection (30; 40) configuré pour être disposé par rapport au tube de reniflard, à l'intérieur du réservoir de liquide (7) de façon à entourer le trou de mise à l'air libre (25), et former une chambre isolée (32; 42) en communication avec le trou mise à l'air libre, dans lequel
l'élément de protection (30; 40) comprend une première partie (31a; 41a) et une deuxième partie (31b; 41b), et
la première partie (31a; 41a) étant située sur le côté du trou de mise à l'air libre (25), et la deuxième partie (31b ; 41b) étant située en-dessous du trou de mise à l'air libre (25) afin de former une partie de fond de la chambre isolée (32; 42 ), et dans lequel, parmi les première et deuxième parties, seule la première partie (31a ; 41a) de l'élément de protection forme une ouverture (33; 43) qui communique entre la chambre isolée et un espace intérieur dans le réservoir de liquide (7) à l'exclusion de la chambre isolée, et
la deuxième partie (31b; 41b) bloque le mouvement du liquide entre la chambre isolée et l'espace intérieur.
